Europäisches Patentamt

(19) European Patent Office

Office européen des brevets

(11) Publication number : **0 056 220**
**B1**

(12) **EUROPEAN PATENT SPECIFICATION**

(45) Date of publication of patent specification :
21.03.84

(21) Application number : **81850251.0**

(22) Date of filing : **22.12.81**

(51) Int. Cl.³ : **E 04 C   2/04,** B 32 B  13/04

(54) A method of producing lightweight multi-layer building elements.

(30) Priority : **07.01.81 SE 8100039**

(43) Date of publication of application :
**21.07.82 Bulletin 82/29**

(45) Publication of the grant of the patent :
**21.03.84 Bulletin 84/12**

(84) Designated contracting states :
**AT CH DE GB IT LI**

(56) References cited :
**CA-A-   904 612**
**DE-A- 2 329 267**
**US-A- 4 053 677**

(73) Proprietor : **INTERNATIONELLA SIPOREX AB**
**Strömgatan 11 Box 21053**
**S-200 21 Malmö (SE)**

(72) Inventor : **Göransson, Rolf Erik**
**Päronvägen 4**
**S-232 02 Akarp (SE)**
Inventor : **Jacobs, Robert**
**Quartier le Bouyas Cidex 8740 Tresques**
**F-30330 Connaux (FR)**

(74) Representative : **Nilsson, Karl et al**
**Stenhagen Patentbyra AB Karlavägen 18**
**S-114 31 Stockholm (SE)**

## A method of producing lightweight multi-layer building elements

The present invention relates to a method of producing lightweight multi-layer building elements, i. e. elements comprising at least two layers. According to one proposal, such multi-layer elements have previously been produced from salbs of steam-cured lightweight aerated concrete by donding the slabs together with a layer of adhesive at the joins between each pair of mutually facing sides of a stack of slabs.

One drawback with this method is that it has not been found possible to obtain sufficient strength with all types of multi-layer elements. Furthermore, the actual bonding operation is often difficult to carry out technically, owing to the fact that part of the adhesive solution or dispersion is absorbed by the slab of steam-cured aerated concrete on whose surface the adhesive is spread. Bonding operations using adhesives often require high temperatures, to effect the necessary hardening of the adhesive. This necessitates the application of an additional heating operation, which in turn costs money. Further, reinforced composite multi-element structures can not be produced from aerated concrete slabs which have been bonded together with the aid of an adhesive in accordance with conventional techniques, unless the reinforcing means have been incorporated in the slabs in conjunction with their manufacture, by casting and aerated concrete mass and dividing the cast body horizontally into sections.

An object of the invention is to provide a method for producing multi-element building structures in which the disadvantages and drawbacks associated with known methods of procedure are at least substantially eliminated.

Accordingly this invention consists in a method of producing a multi-layer building element comprising a relatively thick slab-like part having a first density, and a relatively thin slab-like part having a second density arranged on one or both sides of the relatively thick slab-like part having said first density, said second density being higher than said first density, characterized by cutting slabs of form-stable, but still uncured aerated concrete from one or more porous blocks of uncured aerated concrete ; lifting said slabs with the aid of suction and lifting means ; moving said slabs to a support means and stacking said slabs completely or partially one upon the other on said support means in a sequence corresponding to the desired structure of the building element to be formed, with layers of a mass containing a hydraulic binder arranged between the superposed slabs ; and by charging the resultant composite body to an autoclave and steam-curing said body therein.

The aforementioned mass of hydraulic binder may comprise mixtures containing portland cement, natural cement, hydraulic slags, such as ground granulated blast furnace slag or slag cement, hydraulic lime etc. Subsequent to charging the composite body to the steam-curing autoclave, such binders react with silica present in the mass itself and/or in the slabs with which the intermediate layers are in contact, i. e. the aerated concrete. Such masses may also suitably contain silica-containing material, such as sand — preferably quartz sand — and such waste products as shale ash, fly ash, coke ash etc. The mass used may be one in which the hydraulic binder has been allowed to react with water to a given stage, without losing the thermohydraulic properties. A mass which is highly suitable for this purpose can be had from the so-called scrape-waste obtained during the normal working, e. g. cutting, of cast lightweight aerated concrete bodies while still in a plastic state. For example, when cutting such a concrete body horizontally into sections, the uppermost cut defines a part which has a rough upper surface and which cannot be used in the further manufacturing process. The aforementioned unusable part is normally removed by means of a suitable scraper device and hitherto has been returned, normally subsequent to being finely divided, to that stage of the procedure in which the casting mass is prepared by slurrying the components herefor.

According to an important embodiment of the present invention, reinforcing means can be placed in the intermediate layer of said mass containing the hydraulic binder. The reinforcing means normally has the form of a mat of welded reinforcing rods extending at right angles to each other. This method eliminates the necessity of suspending the reinforcing rods in the mould in which the aerated concrete body is cast — an operation which requires the provision of technical measures, since, among other things, positioning elements and mounting elements must be used to ensure that the reinforcing means are correctly positioned in the cast aerated concrete body. According to one embodiment of the invention, a reinforcing mat is placed in the space between pairs of slabs which when stacked face each other. The position of the reinforcing mat is determined by the level of the upwardly facing surface in the pair of mutually facing surfaces in the stack of slabs. Because of the improved precision with regard to the positioning of the reinforcing mats when producing multi-layer building elements according to the invention, the concrete slabs used can be thinner than was hitherto possible. The need for expensive devices for mounting, positioning and transporting heavy reinforcing elements to the moulds is eliminated when applying the method according to the invention.

According to a further embodiment of the invention, two or more of the slabs of which the multi-layer concrete element is comprised may have mutually different densities. In this way it is possible to produce elements having a combination of improved properties, for example wall elements of improved strength and better heat-insulating properties. The strength of said elements can be varied with the aid of the properties of the reinforcing mats and their position in the element, and also through the type of slabs mounted in the stack of still uncured aerated concrete, whereat a slab of relatively high density has a greater strength. The improved heat-insulating properties are obtained by increasing the porosity of the slabs, although in this case it must be accepted that the slab will be weaker.

Thus, taking a starting point from present day techniques, it is possible to produce multi-layer element, e. g. a sandwich-type element from a relatively thick slab-like element of relatively low density, and a relatively thin slab-like element of high density. To this end, it is possible to start with two bodies of aerated concrete each resting on a separate support. These bodies can be cut horizontally into slab-like sections in a conventional manner, and the unusable parts of the bodies scraped off. Subsequent hereto, using suitable suction lifting devices the slab-like sections can be lifted one at a time from the residues resting on the support in accordance with a suitable programme and placed on a further support in a reversed order according to said programme, whereat reinforcing mats are placed between one or more pairs of mutually facing broad sides of the slab-like sections, and are embedded in the space between said broad sides with the aid of the mass containing said hydraulic binder, scrape-waste obtained when cutting bodies of concrete, said mass being slurried in water to bring it to a suitable consistency. The resultant stack of slab-like elements of different density, lying one upon the other, are then charged to an autoclave and steam cured therein, whereat the mass in said interspaces hardens and forms a very strong bonding layer between the mutually facing broad surfaces of adjacent slabs. The programme used for arranging the slabs in the stack may be one in which there is built up a three-layer body comprising a relatively thick slab and two relatively thin slabs, with a reinforcement means located between mutually facing broad sides of the slabs. A similar three-layer body can then be placed on top of the first mentioned, and so on, until a stack comprising a plurality of three-layer bodies has been built. To facilitate separation of the three-layer bodies subsequent to curing the same, a release agent can be applied between the two mutually adjacent thinner slabs forming the upper and lower layers respectively of two superimposed three-layer bodies.

With respect to the stacking of the slab-like elements, the above described method can be modified in a manner whereby the slab-like elements are placed in alternate shifts, with a side surface of each slab-like element abutting a side surface of another slab-like element so as to form a vertical joint between each pair of slab-like elements. In this case, a vertical joint in one shift of slab-like elements is suitably displaced relative to the joints in the next shift of slab-like elements. Reinforcing mats are suitably arranged in the aforesaid manner, between the facing broad sides of mutually adjacent slabs. The spaces between the mutually facing broad sides and narrow sides of the slabs are suitably filled with a mass containing a hydraulic binder, and the composite body is then charged to a conventional steam-hardening chamber for producing the desired finished sandwich-type element. By means of the described method, it is possible to produce relatively large composite building elements, such as wall elements, ceiling elements, floor beams and girders of varying kinds. As will be understood, it is possible to use slabs of differing density in shifts at different levels, provided that the finished building element in its steam-cured state is of suitable construction with regard to the stresses and strains to which the various components of the building element are subjected as a result of the loads acting thereon.

The aerated concrete slabs may comprise both so-called lightweight foamed concrete and lightweight gas concrete, although lightweight gas concrete is to be preferred.

According to one embodiment of the invention, when producing reinforced multi-layer elements there can be used slabs of form-stable but uncured aerated concrete having on one surface thereof grooves for receiving reinforcing elements, preferably rods or bars, said grooves being formed before or after placing the slabs in said stack, with the grooves facing upwardly. After placing the reinforcing members in the grooves, the spaces remaining are filled with grouting mass containing a hydraulic binder, preferably scrape-waste slurried in water, said mass being applied in such quantities on the upper face of a respective slab as to form an interlayer when placing the next slab in the stack. Thus, in a sandwich element comprising a core layer and two outer layers, the grooves are formed on the upper surface of the lowermost thin slab forming one outer layer of said element, and on the upper surface of the thick slab forming the core layer. In this way there is obtained a sandwich element which is reinforced in the vicinity of the outer layers thereof. The grooves are suitably formed by milling the appropriate surfaces of said slabs. It is also possible to vary the density of the various layers, such that the outmost layers have a density which is greater than that of the core layer.

According to a further embodiment of the invention, grooves or channels can be arranged in a multi-layer element by producing such an element which comprises a plurality of core slabs placed in spaced apart relationship with respect to abutting surfaces of the remaining slabs of the composite element. This enables the construction of wall, ceiling and floor elements which exhibit passages through which pipes, electric cables, etc. can be drawn.

The invention will now be described in more detail with reference to the accompanying drawings, which illustrate the procedural steps taken in accordance with the method of the invention, and in which

Figures 1a-1c illustrate schematically the manufacture of a sandwich-type lightweight aerated concrete element comprising three layers, in which the slabs are placed one upon the other.

Figure 2 illustrates the manufacture of a similar three-layer aerated concrete element, although in this instance provided with reinforcing means,

Figure 3 illustrates schematically the manufacture of a reinforced, three-layer aerated concrete element, with horizontally offset shifts, in which the slabs of said shifts have different densities at different layers,

Figure 4 is a sectional perspective view illustrating the manufacture of a sandwich-type aerated concrete element, in which respective slabs are placed one upon the other, and in which reinforcing rods are placed in grooves provided in the upper surfaces of the slabs,

Figure 5 illustrates in perspective the manufacture of an elongate sandwich-type element exhibiting through-passing channels extending transversally of said element, and

Figure 6 illustrates in perspective the manufacture of an elongate sandwich-type element exhibiting a channel which extends longitudinally of said element.

For the manufacture of steam-cured aerated concrete an aqueous casting mass was prepared from the following ingredients:

| | |
|---|---|
| Sand | 45 kg |
| Portland cement | 35 kg |
| Lime | 12 kg |
| Scrape-waste | 6 kg |
| Aluminium powder + regulators | 2 kg. |

The sand contained quartz and had a silica content of 70-80 %. The lime comprised a finely ground, unslaked lime with a CaO-content of 88-92 %. The cement was a normal type Portland cement. The aluminium powder had a fine-flake structure with a free-aluminium content of up to 90-95 %.

The concrete was produced in accordance with the following procedural steps: The silica-containing sand was wet-ground in a ball mill to a relatively high fine liquidous sludge. The sludge was then carefully mixed with precise quantities of cement, lime, scrape-waste and additional water, to produce a slurry or mass of suitable consistency. Aluminium powder was then mixed with the slurry in an amount such that the steam-cured material had a density of between 150 and 450 kg/m³.

The resultant slurry was poured into a mould, permitted to expand and solidify to a consistency at which it could be readily cut. The casting obtained hereby was form-stable, of parallelepipedic configuration, and not reinforced.

Using a starting material taken from the same batch, there was produced a further unreinforced, parallelepipedic casting. In this instance, however, the amount of cement, lime and sand used was changed, and the quantity of aluminium powder reduced to a level at which the ultimate steam-cured aerated concrete had a density of between 450-900 kg/m³.

Each aerated concrete block was then cut horizontally into a plurality of slabs of varying thickness while the concrete was still in a plastic state. The concrete block of relatively high density was cut into relatively thin slabs, which were intended to serve as the outer layers or elements of the ultimate sandwich structure, while the other concrete block of relatively low density was cut into relatively thick slabs, which were intended to form the core elements of said ultimate structure.

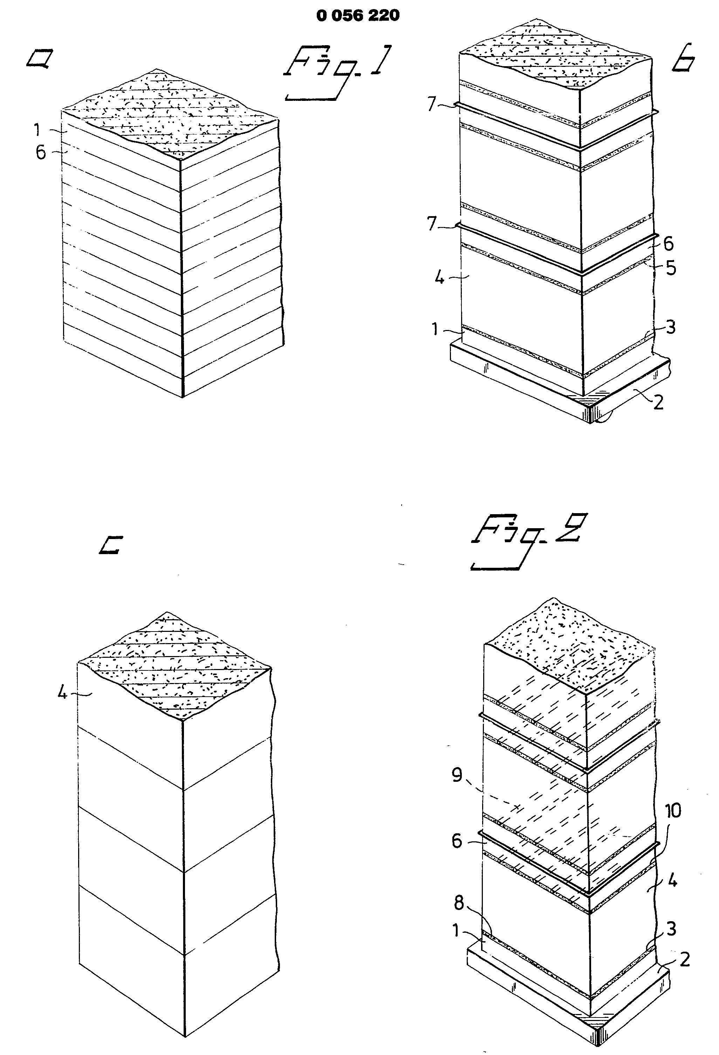

Referring first to Figures 1a-1c, there is illustrated in Figure 1a a block of aerated concrete resting on a support (not shown) and divided horizontally into a plurality of slabs, each having a thickness of about 20 mm. The density of the concrete forming the block in Figure 1a is assumed to be 600 kg/m³. Figure 1c illustrates a further aerated concrete block resting on a support (not shown) and divided into a plurality of slabs 4 whose thickness is greater than that of the slabs illustrated in Figure 1a, e. g. a thickness of about 250 mm. The block shown in Figure 1c is assumed to have a density of 200 kg/m³. In accordance with the invention, a first slab 1 from the severed block shown in Figure 1a is lifted by means of a suitable suction device and placed on a further, mobile support 2, whereafter a layer 3 of bonding substance, e. g. a bonding substance comprising scrape-waste from the same concrete mass as that from which the slabs 1 are formed, is spread as uniformly as possible over the upper surface of said first slab 1, said scrape-waste first being slurried in water, to bring it to a suitable consistency.

A slab 4 of greater thickness is then lifted from the severed block shown in Figure 1c, e. g. by means of a similar suction-lifting device, and placed on top of the thinner slab 1 and the still soft bonding layers, whereafter a further bonding layer 5, e. g. comprising saif slurried scrape-waste, is spread evenly over the upper surface of said thicker slab 4 and a further slab, referred to in Figure 1a, is placed on top of said bonding layer 5. This process is repeated until the structure illustrated in Figure 1b is obtained, said structure comprising a plurality of sandwich-type building elements separated by means of separating layers 7, as illustrated in Figure 1b. The mobile support 2 bearing the three-layer sandwich element 1, 4, 6 is then moved to a press in which said sandwich element is compressed to a given thickness. As will be understood, a number of such sandwich-type elements, compressed to the desired thickness or height, may be formed, whereafter said elements are charged to a steam-curing autoclave to be cured, preferably at a pressure of about 180 °C. Because of the bonding mass between respective slabs, said slabs will be firmly bound together, to form a durable building element. The suction devices used for lifting the slabs from respective blocks may, to advantage, be those described in Swedish Patent Specification No. 7 413 713-4 (Publication No. 388 809).

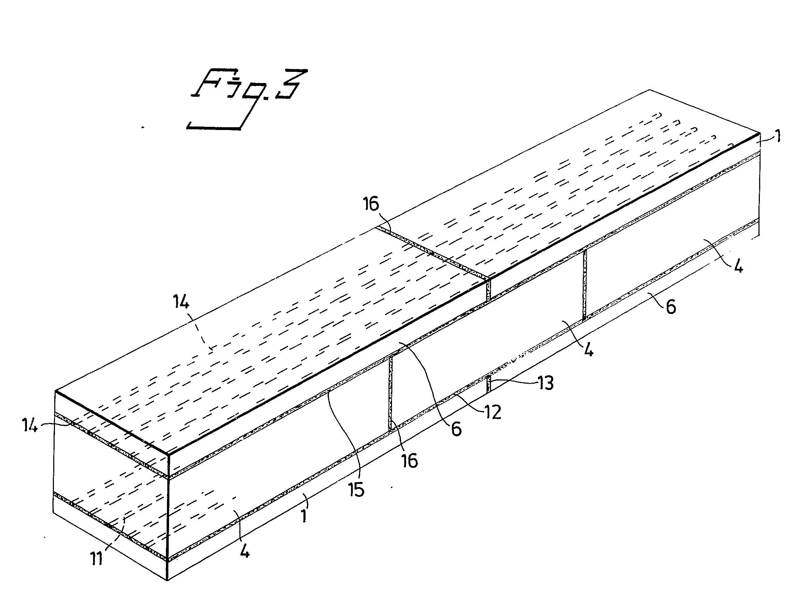

With reference ot the stack in Figure 2, the method described with reference to Figure 1 can be modified to build reinforced, sandwich-type three-layer structures.

In this embodiment, a slab-like element 1 is lifted from the parallelepipedic lightweight gas concrete body a in Figure 1 comprising said horizontally cut slab-like elements, and is placed on the movable support 2. A reinforcing mat 8 is then placed on the upper broad side of said slab-like element 1 and embedded in a layer 3 of scrape-waste slurried in water and obtained from an earlier cutting operation. A slab-like element 4 is then lifted from the stack shown in Figure 1c and placed on the reinforcing mat 8 embedded in said layer 3. A reinforcing mat 9 is then placed on the upper broad side of the slab-like element 4 and embedded in a further layer 10 of scrape-waste, whereafter a further slab-like element 6 is lifted from the stack a in Figure 1 and placed on the reinforcing mat 9 and the layer 10, to form a sandwich-type three-layer body.

Hereafter, three further layers are placed on said three-layer body, to form a further sandwich-type three-layer structure, etc., with separating layers arranged between the different three-layer structures as in the Figure 1 embodiment. The three-layer structures 1, 4, 6 resting on the movable support are then moved to a station in which the layers 3 and 10 in said stack are compressed to an exact, given thickness of the stack, whereafter the structures are steam cured in a normal manner. In this way there is obtained a reinforced building element possessing good strength qualities.

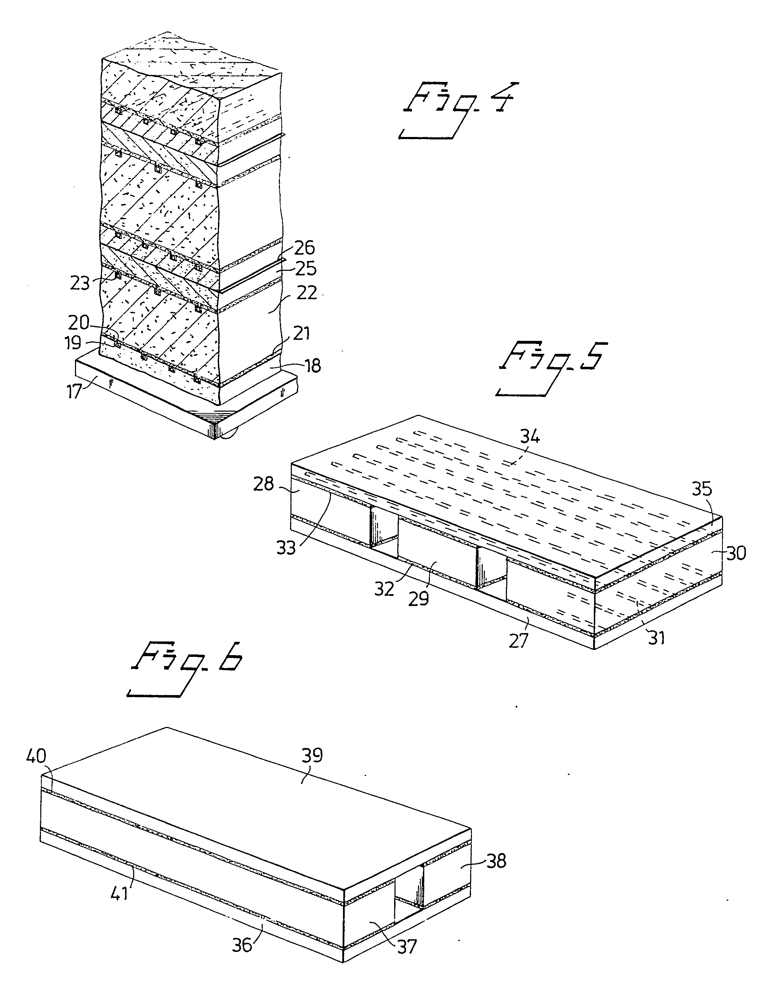

Referring to Figure 3 there are lifted from the stack in Figure 1 two slab-like elements 1 and 6, which are placed on a horizontal support (not shown) with the short sides of said elements facing each other. A reinforcing means 11 is then placed on the surface formed by the upper broad sides of the two slab-like elements 1 and 6, and grouted in a layer 12 of scrape-waste slurried in water, in a manner similar to that earlier described. In this case, it is also ensured that the joints 13 between said mutually facing short sides of the slab-like elements are filled with a similar slurried scrape-waste. Three slab-like elements 4 are now lifted from the stack in Figure 1c and laid as a shift of slab-like elements on the surface formed by the upper sides of the slab-like elements 1 and 6 carrying the reinforcing means 11 and the layer 12 of scrape waste. Further reinforcing means 14 and a layer of scrape waste 15 for grouting in said reinforcing means 14 are then arranged on the tops of the slab-like elements 4, said scrape waste being applied in a quantity sufficient to fill the joints between the mutually facing short sides, to form bonded joints 16.

Subsequent to lifting further slab-like elements 1 and 6 from the stack in Figure 1a and forming a further shift of elements and filling the joints formed between facing short sides with scrape waste, the composite sandwich-type body can be moved on the support upon which it rests into a steam-curing chamber, where the whole of the body is cured and hardened. It is emphasized that each joint 16 in the layer of thicker, intermediate slab-like elements 4 is offset through a half-element length relative to each joint 13 in the shift of thinner slab-like elements 1, 6.

The method provides excellent possibilities of producing building elements of different dimensions for different purposes. It can also be used to produce building elements « tailored » to special purposes.

In Figure 4 there is illustrated a lightweight gas-concrete sandwich-type building element. In the production of the illustrated element 4, a relatively thin slab 18 of form-stable but still uncured lightweight gas concrete is placed on a support 17. A plurality of mutually parallel grooves 19 are then formed in the upwardly facing side of said element, with the aid of a rotatable miller. Reinforcing rods 20 are then arranged in the grooves 19 and the residual spaces in the grooves filled with scrape-waste obtained when cutting the concrete body into said slabs, said scrape-waste being previously slurried with water. In conjunction herewith there is also formed on the upper surface of the slab 18 a layer 21 intended to form an intermediate layer. A relatively thick slab 22 is then placed on top of the slab 18. Grooves 23 similar to the grooves 19 are then milled in the upper surface of the thick slab 22. Reinforcing rods are then placed in respective grooves 23 and the residual spaces filled with slurried scrape-waste. In addition, a layer 24 intended as an intermediate layer is applied to the upper surface of the slab 22. A thinner slab 25 is then stacked on top of the two slabs 18 and 22, and a separation layer 26 is applied to the upper surface of the slab 25. Subsequent hereto, a further thin slab, a further core slab and a further thin slab are placed on the stack comprising slabs 18, 22 and 25, and then a further combination of slabs is stacked in the aforedescribed manner, whereat a further separation layer is formed between slabs not belonging to the same sandwich element. The complete stack of slabs belonging to the different sandwich elements, with intermediate and separation layers, is then charged to an autoclave, where the lightweight gas concrete is steam cured, so that the slabs of respective sandwich elements are bonded together through an intermediate layer in the joints between said slabs, and the reinforcing rods are grouted in the steam-cured concrete. The method in which the reinforcing rods are placed in grooves offers a distinct advantage over the method in which said rods are placed as an intermediate layer, since in the former case the reinforcing rods are more readily encompassed in the grouting mass. No particular measures need be taken to ensure that the rods are placed at the correct distance apart, since the spacing of the rods is determined by the grooves.

In Figure 5 there is illustrated a sandwich element which comprises two thin outer layers and a thicker core layer. The core layer, however, is broken at two locations, to form two transversely extending channels, through which pipes and electric cables etc. can be drawn when the sandwich element is mounted in position. In the manufacture of this building element a relatively thin slab 27 of form-stable, but non-cured lightweight gas concrete is placed on a support (not shown). Three thicker slabs 28, 29, 30 of a material similar to that from which the thinner slab 27 was made, were then placed on said thinner slab with the mutually facing short sides of the thicker slabs spaced apart, to leave spaces between the blocks 28, 29, 30 for forming said channels. Prior hereto, reinforcing rods 31 and scrape-waste intended to form an intermediate layer 32 are arranged on the upper surface of the slab 27. In this case, it is possible either to cover that part of the reinforcing means passing through the open space between adjacent thicker slabs with a layer of slurried scrape-waste, or — as in the Figure — merely to apply said mass to the joints between the thinner slab 27 and the thicker slabs 28, 29 and 30. Subsequent to coating the upper surface of each thick slab with a layer 33 of slurried scrape-waste, and to grouting a plurality of reinforcing rods 34 in said layer, a further thin slab 35 is placed on top of the previous slabs. The composite building element comprising said slab-like elements can now be charged to an autoclave and the concrete steam-cured, to form a ready sandwich-type building structure, optionally subsequent to grouting in that part of respective reinforcing rods located in the channels formed by the adjacent thicker slabs.

Figure 6 illustrates in perspective a sandwich-type element similar to that shown in Figure 5, but with the exception that the core elements are placed so as to form in the finished building element a longitudinally extending channel between the mutually facing long sides of said core elements. The bottom, thin slab is referenced 36, the two thicker, core elements are referenced 37 and 38, and the top, thin slab, serving as an outer layer, is referenced 39. An upper intermediate layer 40 and a lower intermediate layer 41 bond together the slabs 36, 37, 38 and 39 forming the composite sandwich building element.

Although not specifically mentioned in the aforegoing, the uncured, aerated concrete block from which the slabs forming the multi-layer building element are cut, may have incorporated thin reinforcing member arranged during the casting of said block.

## Claims

1. Method of producing a multi-layer lightweight building element comprising a relatively thick slab-like part having a first density, and a relatively thin slab-like part having a second density arranged on one or both sides of the relatively thick slab-like part having said first density, said second density being higher than said first density, characterized by cutting slabs of form-stable, but still uncured aerated concrete from one or more porous blocks of uncured aerated concrete ; lifting said slabs with the aid of suction and lifting means ; moving said slabs to a support means and stacking said slabs completely or partially one upon the other on said support means in a sequence corresponding to the desired structure of the building element to be formed, with layers of a mass containing a hydraulic binder arranged between the superposed slabs ; and by charging the resultant composite body to an autoclave and steam-curing said body therein.

2. A method according to Claim 1, characterized in that the mass containing said hydraulic binder also contains a silica-containing substance.

3. A method according to Claim 2, characterized in that the silica-containing substance is quartz sand.

4. A method according to Claims 1-3, characterized in that the mass containing hydraulic binder comprises so-called scrape-waste obtained when working or machining a body of plastic aerated concrete, said scrape-waste being optionally slurried in water.

5. A method according to Claims 1-4, characterized by embedding reinforcing means in the intermediate layer of mass containing said hydraulic binder.

6. A method according to Claims 1-5, characterized in that the slabs of form-stable but not yet cured aerated concrete incorporate one or more reinforcing means.

7. A method according to Claims 1-6, characterized in that slabs are placed to form a stack of mutually superimposed similar sections with two or more slabs at each level of the stack.

8. A method according to Claim 7, characterized in that the joints between mutually adjacent slabs of one level in the stack are offset relative to the joints between relatively adjacent slabs of another level in the stack.

9. A method according to Claims 1-8, characterized in that the slabs of form-stable but still uncured aerated concrete comprise lightweight gas concrete.

10. A method according to Claims 1-9, characterized by forming grooves in the slabs of form-stable but still uncured aerated concrete.

11. A method according to Claim 10, characterized by placing reinforcing rods or bars in respective ones of said grooves, and by embedding said reinforcing rods or bars in said grooves with mass containing hydraulic binder.

12. A method according to Claim 10, characterized in that said grooves are formed by milling.

13. A method according to Claim 10 or Claim 11, characterized in that said reinforcing rods or bars are embedded in said grooves with the same mass as that forming said intermediate layer.

14. A method according to Claims 1-13, characterized in that one or more slabs which do not form the outer layers of a multi-layer building element are placed with mutually opposing surfaces spaced from one another so as to form one or more channels in said multi-layer building element.

## Ansprüche

1. Verfahren zur Herstellung eines mehrschichtigen Leichtgewicht-Bauelements mit einem verhältnismäßig dicken plattenähnlichen Teil, das eine erste Dichte aufweist, und einem verhältnismäßig dünnen plattenähnlichen Teil, das eine zweite Dichte aufweist und welches auf einer oder auf beiden Seiten des verhältnismäßig dicken plattenähnlichen Teils mit der ersten Dichte angeordnet ist, wobei die zweite Dichte höher als die erste Dichte ist, gekennzeichnet durch ein Ausschneiden von Platten eines formstabilen, jedoch noch unausgehärtetem Gasbetons aus einem oder mehreren porösen Blöcken des unausgehärteten Gasbetons, ein Anheben der Platten mit Hilfe eines Saughebewerkzeuges, ein Bewegen der Platten in Richtung auf eine Tragvorrichtung und ein vollständiges oder teilweises Stapeln der Platten eine über die andere auf der Tragvorrichtung in einer Reihenfolge, die mit der gewünschten Struktur des Bauelements, das zu bilden ist, korrespondiert, wobei Schichten einer Masse, die ein hydraulisches Bindemittel enthält, zwischen den übereinander gelagerten Platten vorgesehen sind, und durch ein Verbringen sich ergebende zusammengesetzte Körper in einen Autoklaven, um ihn darin dampfauszuhärten.

2. Verfahren nach Anspruch 1, dadurch gekennzeichnet, daß die Masse, die den hydraulischen Binder enthält, aus einer Kieselsäure enthaltenden Substanz besteht.

3. Verfahren nach Anspruch 2, dadurch gekennzeichnet, daß die Kieselsäure enthaltende Substanz Quarzsand ist.

4. Verfahren nach den Ansprüchen 1 ... 3, dadurch gekennzeichnet, daß die Masse, die den hydraulischen Binder enthält, aus einer sog. Abkratzabfallmasse besteht, die gewonnen wird, wenn ein Körper aus einem plastischen Gasbeton bearbeitet wird, wobei die Abkratzabfallmasse wahlweise in Wasser schlammig angerührt wird.

5. Verfahren nach den Ansprüchen 1 ... 4, dadurch gekennzeichnet, daß ein Einlegen von Bewehrungselementen in die mittlere Schicht der Masse, die den hydraulischen Binder enthält, vorgesehen ist.

6. Verfahren nach den Ansprüchen 1 ... 5, dadurch gekennzeichnet, daß die Platten des formstabilen, jedoch noch nicht ausgehärteten Betons eines oder mehrere Bewehrungselemente enthalten.

7. Verfahren nach den Ansprüchen 1 ... 6, dadurch gekennzeichnet, daß die Platten so angeordnet werden, daß die einen Stapel von sich gegenseitig überlagernden gleichartigen Abschnitten mit zwei oder mehr Platten in jeder Ebene des Stapels bilden.

8. Verfahren nach Anspruch 7, dadurch gekennzeichnet, daß die Fugen zwischen den einander benachbarten Platten einer Ebene in dem Stapel relativ zu den Fugen zwischen relativ benachbarten Platten einer anderen Ebene in dem Stapel versetzt sind.

9. Verfahren nach den Ansprüchen 1 ... 8, dadurch gekennzeichnet, daß die Platten des formstabilen, jedoch noch nicht ausgehärteten Betons aus einem Leichtgewicht-Gasbeton bestehen.

10. Verfahren nach den Ansprüchen 1 ... 9, gekennzeichnet durch ein Ausbilden von Nuten in den Platten des formstabilen, jedoch noch nicht ausgehärteten Betons.

11. Verfahren nach Anspruch 10, gekennzeichnet durch ein jeweiliges Einlegen von Bewehrungsstäben in die Nuten und durch ein Einbetten der Bewehrungsstäbe in den Nuten mittels der Masse, die den hydraulischen Binder enthält.

12. Verfahren nach Anspruch 10, dadurch gekennzeichnet, daß die Nuten durch Fräsen ausgebildet werden.

13. Verfahren nach Anspruch 10 oder 11, dadurch gekennzeichnet, daß die Bewehrungsstäbe in den Nuten mittels derselben Masse, die auch die Zwischenschicht bildet, eingebettet werden.

14. Verfahren nach den Ansprüchen 1 ... 13, dadurch gekennzeichnet, daß eine oder mehrere Platten, die nicht die äußeren Schichten eines mehrschichtigen Bauelements bilden, mit einem Abstand zwischen den sich gegenüberstehenden Flächen angeordnet werden, um so einen oder mehrere Kanäle in dem mehrschichtigen Bauelement zu bilden.

## Revendications

1. Procédé de fabrication d'un élément de construction multicouche léger comprenant une partie en forme de dalle relativement épaisse présentant une première densité, et une partie en forme de dalle relativement mince présentant une deuxième densité disposée sur l'une ou sur les deux faces de la partie en forme de dalle relativement épaisse présentant la première densité, ladite deuxième densité étant plus élevée que la première densité, ledit procédé étant caractérisé en ce qu'on découpe des dalles de béton aéré stable dans sa forme mais non encore durci dans un ou plusieurs blocs poreux de béton aéré pas encore durci ; on soulève lesdites dalles à l'aide de moyens de levage et d'aspiration ; on amène lesdites dalles sur des moyens de support et on les empile en superposition complète ou partielle sur ledit support dans une séquence correspondant à la structure désirée de l'élément de construction à former, avec des couches d'une masse contenant un liant hydraulique disposées entre les dalles superposées ; et on introduit le corps composite ainsi obtenu dans un autoclave à l'intérieur duquel on durcit ledit corps à la vapeur.

2. Procédé suivant la revendication 1, caractérisé en ce que la masse contenant le liant hydraulique contient également une substance renfermant de la silice.

3. Procédé suivant la revendication 2, caractérisé en ce que la substance renfermant de la silice est du sable de quartz.

4. Procédé suivant l'une des revendications 1 à 3, caractérisé en ce que la masse contenant un liant hydraulique comprend des résidus de râclage obtenus lors du façonnage ou de l'usinage d'un corps en béton plastique aéré, lesdits résidus de râclage étant éventuellement délayés dans de l'eau.

5. Procédé suivant l'une des revendications 1 à 4, caractérisé en ce qu'on noie des éléments d'armature dans la couche intermédiaire de la masse contenant le liant hydraulique précité.

6. Procédé suivant l'une des revendications 1 à 5, caractérisé en ce que les dalles en béton aéré stable dans sa forme mais pas encore durci comprennent un ou plusieurs éléments d'armature.

7. Procédé suivant l'une des revendications 1 à 6, caractérisé en ce que les dalles sont placées de manière à former une pile de sections analogues mutuellement superposées avec deux ou plusieurs dalles à chaque niveau de la pile.

8. Procédé suivant la revendication 7, caractérisé en ce que les joints entre les dalles mutuellement adjacentes d'un niveau de la pile sont décalées par rapport aux joints entre les dalles relativement adjacentes d'un autre niveau de la pile.

9. Procédé suivant l'une des revendications 1 à 8, caractérisé en ce que les dalles de béton aéré stable dans sa forme mais non encore durci comprennent du béton léger gazeux.

10. Procédé suivant l'une des revendications 1 à 9, caractérisé en ce qu'on forme des rainures dans les dalles en béton aéré stable dans sa forme mais non encore durci.

11. Procédé suivant la revendication 10, caractérisé en ce qu'on dispose des tiges ou des barres d'armature dans les rainures précitées et on noie lesdites tiges ou barres d'armature dans lesdites rainures avec une masse contenant du liant hydraulique.

12. Procédé suivant la revendication 10, caractérisé en ce que les rainures sont formées par fraisage.

13. Procédé suivant la revendication 10 ou la revendication 11, caractérisé en ce que les tiges ou barres d'armature sont noyées dans les rainures avec la même masse que celle qui constitue la couche intermédiaire.

14. Procédé suivant l'une des revendications 1 à 13, caractérisé en ce que une ou plusieurs dalles qui ne forment pas les couches extérieures d'un élément de construction multicouche sont disposées avec leurs faces en regard espacées l'une de l'autre de manière à former un ou plusieurs passages dans ledit élément de construction multicouche.

Fig.1

Fig.2

Fig.3

Fig. 4

Fig. 5

Fig. 6